# EUROPÄISCHE PATENTSCHRIFT

(11) **EP 0 775 170 B1**
(45) Veröffentlichungstag und Bekanntmachung des Hinweises auf die Patenterteilung: **11.03.1998**
(21) Anmeldenummer: 95930433.8
(22) Anmeldetag: 31.07.1995
(51) Int. Cl.: C08G 69/10, C08G 73/06, C11D 3/37, C02F 5/12

(54) **VERFAHREN ZUR HERSTELLUNG VON KONDENSATEN DER ASPARAGINSÄURE**
METHOD FOR PRODUCING CONDENSATES OF ASPARTIC ACID
PROCEDE DE FABRICATION DE PRODUITS DE CONDENSATION DE L'ACIDE ASPARTIQUE

(30) Priorität: 12.08.1994 DE 4428596
(43) Veröffentlichungstag der Anmeldung: 28.05.1997
(73) Patentinhaber: BASF AKTIENGESELLSCHAFT, 67056 Ludwigshafen (DE)
(72) Erfinder: KRONER, Matthias, D-67304 Eisenberg (DE); SCHORNICK, Gunnar, D-67271 Neuleiningen (DE)
(86) Internationale Anmeldenummer: EP9503030
(87) Internationale Veröffentlichungsnummer: WO9605244

(56) Entgegenhaltungen:
- WO-A-92/14753
- WO-A-93/24661
- US-A- 5 057 597
- US-A- 5 284 512
- US-A- 5 329 020

## Beschreibung

Die Erfindung betrifft ein Verfahren zur Herstellung von Polykondensaten der Asparaginsäure durch Polykondensation von Asparaginsäure bei Temperaturen oberhalb von 140°C in Gegenwart von Katalysatoren.

Polykondensate der Asparaginsäure können nach verschiedenen Verfahren hergestellt werden. Ein Verfahren dieser Art ist die thermische Polykondensation von feinteiliger Asparaginsäure in einem bewegten Pulverbett bei Temperaturen von etwa 180-250°C unter Abdestillieren von Wasser, vgl. US-A-5 057 597. Die Polykondensation verläuft hierbei in fester Phase. Die dabei entstehenden Polyasparaginsäureimide enthalten schlecht biologisch abbaubare Anteile.

Aus Journal of Medicinal Chemistry, Band 16, Seiten 893-897 (1973), ist ein Verfahren bekannt, bei dem man Asparaginsäure in Gegenwart von Phosphorsäure als Katalysator kondensiert. Aus der WO-A-93/24661 sind Verfahren zur Herstellung von Polykondensaten der Asparaginsäure bekannt, wobei man als Katalysator beispielsweise Phosphorsäure, phosphorige Säure, unterphosphorige Säure, Salzsäure, Schwefelsäure, Natriumhydrogensulfat oder Kaliumhydrogensulfat als Katalysator verwendet. Im Anschluß an die Polykondensation müssen die Säuren aus den Polykondensaten abgetrennt werden. Natriumhydrogensulfat und Kaliumhydrogensulfat ergeben Polykondensate mit relativ niedrigen Molmassen. Da Natriumhydrogensulfat erst oberhalb der üblichen Polykondensationstemperatur schmilzt, bereitet seine Anwendung als Katalysator bei der Polykondensation von Asparaginsäure Schwierigkeiten.

Der Erfindung liegt die Aufgabe zugrunde, ein technisch einfaches Verfahren zur Polykondensation von Asparaginsäure zur Verfügung zu stellen.

Die Aufgabe wird erfindungsgemäß gelöst mit einem Verfahren zur Herstellung von Polykondensaten der Asparaginsäure durch Polykondensation von Asparaginsäure bei Temperaturen oberhalb von 140°C in Gegenwart von Katalysatoren, wenn man als Katalysator Mischungen aus Kalium- und Natriumhydrogensulfat verwendet, deren Schmelzpunkte höchstens 200°C betragen.

Als Asparaginsäure kann man L-, DL- oder D-Asparaginsäure sowie Mischungen der genannten Asparaginsäuren einsetzen. Asparaginsäure kann beispielsweise durch thermische Addition von Ammoniak an Maleinsäure, durch enzymatisch katalysierte Anlagerung von Ammoniak an Fumarsäure oder durch Fermentation von Glucose und Ammoniumsalzen mit Hilfe von Mikroorganismen hergestellt werden. Die Kristallgröße und Art der Herstellung der Asparaginsäure haben keinen Einfluß auf die Polykondensation. Die zur Polykondensation eingesetzte feinteilige Asparaginsäure kann beispielsweise mittlere Teilchendurchmesser von 10 µm bis 5 mm, vorzugsweise 50 µm bis 1 mm haben.

Die Polykondensation der feinteiligen Asparaginsäure erfolgt bei Temperaturen oberhalb von 140°C, vorzugsweise in dem Temperaturbereich von 160 bis 220°C.

Als Katalysator werden erfindungsgemäß Mischungen aus Kalium- und Natriumhydrogensulfat verwendet, deren Schmelzpunkte höchstens 200°C betragen. Solche Mischungen besitzen gegenüber den reinen Salzen einen niedrigeren Schmelzpunkt. Ihr Einsatz bei der Polykondensation hat gegenüber den reinen Salzen den Vorteil, daß man zumindest zu Beginn der Polykondensation in einer flüssigen bis plastischen Reaktionsphase arbeiten kann und daß die Durchmischung der Reaktionskomponenten schneller und unkomplizierter vor sich geht. Durch Mischen von Natriumhydrogensulfat und Kaliumhydrogensulfat oder durch gemeinsames Kristallisieren der genannten Verbindungen wird der Schmelzpunkt in einigen Mischungsbereichen derart erniedrigt, daß er sogar unterhalb der Polykondensationstemperaturen liegt. Als Schmelzpunkt werden die Temperaturen verstanden, bei denen eine klare Salzschmelze vorliegt.

Auch die Erweichungstemperaturen von Mischungen bzw. Mischkristallen aus Natrium- und Kaliumhydrogensulfat werden herabgesetzt. Als Erweichungstemperatur wird die Temperatur verstanden, bei der ein erstes Aufschmelzen und Erweichen der Kristalle erfolgt. Bei dieser Temperatur bzw. in diesem Temperaturbereich entstehen oft trübe Schmelzen, die noch feste, ungeschmolzene Salzanteile enthalten. In Tabelle 1 sind Erweichungstemperaturen und Schmelztemperaturen für verschiedene Mischungen aus Kaliumhydrogensulfat und Natriumhydrogensulfat angegeben.

**Tabelle 1**

| Molverhältnis von KHSO₄:NaHSO₄ | Erweichungstemperatur [°C] | Schmelztemperatur [°C] |
|---|---|---|
| 1:0 | 216 | 216 |
| 0,9:0,1 | 200 | 200 |
| 0,8:0,2 | 120 | 180 |
| 0,7:0,3 | 55-75 | 160 |
| 0,6:0,4 | 120-130 | 140 |
| 0,5:0,5 | 110-125 | 135 |
| 0,45:0,55 | nicht bestimmt | 127 |
| 0,4:0,6 | 63-73 | 135 |
| 0,3:0,7 | 107-122 | 145 |
| 0,2:0,8 | 78-96 | 155 |
| 0,1:0,9 | 82-96 | 170 |
| 0:1 | >300 | >300 |

Die erfindungsgemäß als Katalysator verwendeten Mischungen oder Mischkristalle aus Kalium- und Natriumhydrogensulfat haben Schmelzpunkte von höchstens 200°C und vorzugsweise höchstens 180°C. Das Molverhältnis von Kaliumhydrogensulfat beträgt in diesen Fällen beispielsweise 0,8:0,2 bis 0,1:0,9 und vorzugsweise 0,7:0,3 bis 0,1:0,9. Der Schmelzpunkt dieser Mischungen kann noch weiter erniedrigt werden, wenn eine oder mehrere andere Salze zugesetzt werden, so daß ternäre oder quartäre Salzschmelzen entstehen. Beispiele sind Natriumsulfat, Natriumdihydrogenphosphat, Ammoniumhydrogensulfat, Trimethylammoniumhydrogensulfat, Triethylammoniumhydrogensulfat, Tributylammoniumhydrogensulfat, Ammoniumsulfat, Ammoniumhydrogenphosphat und Diammoniumhydrogenphosphat.

Die als Katalysator verwendeten Mischungen sind bei den Temperaturen, bei der die Polykondensation der Asparaginsäure durchgeführt wird, flüssig und können leicht und schnell mit den Asparaginsäurekristallen vermischt werden. Als geeignete Apparate für die Polykondensation kommen beispielsweise Extruder, Kneter, Walzen, Kalander, Förderbänder und verschiedenartige Mischer in Betracht. Prizipiell eignen sich alle technisch verfügbaren Apparate, die für das Mischen von Flüssigkeiten und Feststoffen geeignet sind. Pro Mol Asparaginsäure setzt man beispielsweise 0,01 bis 10 Mol Hydrogensulfat als Katalysator ein, wobei Hydrogensulfat die erfindungsgemäß zu verwendende Mischung aus Natrium- und Kaliumhydrogensulfat bedeutet. Alkalimetallhydrogensulfate können bei längerem Tempern auf Temperaturen um 200°C Wasser abspalten und Pyrosulfate bilden. Alkalimetallpyrosulfate reagieren bekanntlich unter Aufnahme von Wasser unter Rückbildung von Hydrogensulfaten. Die Hydrolyseanfälligkeit der Alkalimetallpyrosulfate kann ausgenützt werden, um das bei der Polykondensation von Asparaginsäure entstehende Reaktionswasser zu binden. Die Pyrosulfate reagieren daher ebenfalls als Beschleuniger der Polykondensation von Asparaginsäure.

Je nach Mengenanteil der Hydrogensulfate erstarren die Polykondensationsmischungen zu porösen Schäumen. Die Zeiten, während der die Reaktionsmischungen flüssig bleiben, sind ausreichend, um eine innige Vermischung aller Reaktionspartner zu gewährleisten. Wenn größere Mengen an Hydrogensulfaten eingesetzt werden, z.B. mehr als 1 mol Hydrogensulfat pro Mol Asparaginsäure, so bleiben die Reaktionsmischungen auch im späteren Verlauf der Polykondensation weich und pastös. Das bei der Polykondensation entstehende Polysuccinimid ist in der Salzschmelze nicht löslich und fällt aus. Es entstehen Niederschläge von Polysuccinimid, die in der Salzschmelze aufgeschlämmt sind. Die Teilchengröße der dabei anfallenden Polysuccinimide liegt beispielsweise in dem Bereich von 100 µm bis 5 mm. Die Polykondensation erfolgt hierbei nach Art einer Fällungspolymerisation in einer Schmelze, die Mischungen aus Kalium- und Natriumhydrogensulfat enthält. Die Schmelze kann gegebenenfalls noch weitere Verbindungen enthalten, die den Schmelzpunkt der erfindungsgemäß zu verwendenden Salze erniedrigen.

Nach dem erfindungsgemäßen Verfahren ist es auch möglich, Ammoniumaspartat zu kondensieren. Beispielsweise kann man aus einer wäßrigen Ammoniumaspartatlösung durch Zugabe einer Mischung aus Natriumhydroxid und Kaliumhydroxid im Molverhältnis 1:1 Ammoniak freisetzen und Ammoniak zusammen mit Wasser durch Strippen aus der Lösung entfernen. Der ausgetriebene Ammoniak ist rein und kann erneut für Synthesezwecke verwendet werden. Die wäßrige Lösung, die Natriumaspartat und Kaliumaspartat im Molverhältnis 1:1 enthält, kann mit Schwefelsäure angesäuert werden, so daß eine wäßrige Mischung aus Asparaginsäurekristallen und Natriumhydrogensulfat und Kaliumhydrogensulfat entsteht. Die Mischung kann eingedampft und wie oben beschrieben polykondensiert werden. Das so erhältliche Polykondensat kann ohne weitere Aufarbeitung durch Zugabe von Natronlauge hydrolysiert werden. Die wäßrige Lösung enthält dann Polynatriumaspartat und Natrium- und Kaliumsulfat. Solche Lösungen eignen sich beispielsweise als Waschmittelzusatz.

Die nach dem erfindungsgemäßen Verfahren erhältlichen Polykondensate der Asparaginsäure werden beispielsweise in mit Alkalimetallbasen neutralisierter Form als Zusatz zu phosphatfreien und phosphatreduzierten Wasch- und Reinigungsmitteln, als Dispergiermittel für Pigmente und als Scaleinhibitor z.B. bei der Meerwasseraufbereitung, verwendet. Die Polykondensate haben K-Werte von 9 bis 100, vorzugsweise 10 bis 50 (bestimmt nach H. Fikentscher in 1 %iger wäßriger Lösung bei 25°C und pH 7 am Natriumsalz der Polykondensate). Die Molmassen der Polykondensate betragen 500 bis 200 000 vorzugsweise 1 200 bis 100 000.

Die Prozentangaben in den Beispielen sind Gew.-%. Die K-Werte wurden nach H. Fikentscher, Cellulose-Chemie, Band 13, 58-64 und 71-74 (1932) in wäßriger Lösung bei einer Temperatur von 25°C und einer Konzentration von 1 Gew.-% bei pH 7 am Natriumsalz der Polyasparaginsäuren bestimmt.

### Beispiel 1

In einem 2 1-fassenden Glasreaktor, der mit Rührer und Destillationsbrücke ausgestattet ist, werden unter intensivem Rühren Mischungen aus 500 g Wasser, 133 g (1 Mol) Asparaginsäure und den jeweils aus Tabelle 2 ersichtlichen Mengen an Natriumhydrogensulfat und Kaliumhydrogensulfat hergestellt und anschließend jeweils im Vakuum der Wasserstrahlpumpe zur Trockene eingedampft. Der Rückstand wird anschließend 4 Std. auf 180°C erhitzt. Dabei entsteht im Verlauf der Polykondensation in Abhängigkeit von der eingesetzten Salzmenge ein fester, erstarrter Schaum oder eine breiige, viskose Reaktionsschmelze. Nach Beendigung der Polykondensation wird die Reaktionsmasse abgekühlt und in 1 1 Wasser aufgenommen. Das unlösliche Polykondensat wird abfiltriert, mit Wasser gewaschen und getrocknet. Die K-Werte der Polykondensate sind in Tabelle 2 angegeben.

**Tabelle 2**

| Beispiel | NaHSO₄ [mol] | KHSO₄ [mol] | Ausbeute [g] | K-Wert | Verhalten während der Polykondensation |
|---|---|---|---|---|---|
| 1 | 0,05 | 0,05 | 69 | 24,9 | erstarrt nach 25 min. zu einem Schaum |
| 2 | 0,15 | 0,15 | 79 | 27,1 | nach 30 min. erstarrender Schaum |
| 3 | 0,5 | 0,5 | 90 | 28,9 | nach 40 min. breiige Masse |
| 4 | 0,75 | 0,75 | 98 | 26,7 | nach 50 min. wie feuchter Sand |
| 5 | 1,0 | 1,0 | 98 | 24,3 | bleibt rührbar, weich |
| 6 | 1,5 | 1,5 | 94 | 24,2 | bleibt rührbar, weich |
| 7 | 2,5 | 2,5 | 93 | 25,2 | cremig, schaumig, weich |

Durch den Einsatz niedrigschmelzender Mischungen aus Natrium- und Kaliumhydrogensulfat erhält man gut zu handhabende Reaktionsmischungen, die zu Beginn der Polykondensation immer flüssig sind und in Abhängigkeit von der Menge der Salzschmelze auch während der Kondensation flüssig bleiben.

### Vergleichsbeispiele

In einem 2 1-fassenden Glasreaktor, der mit Rührer und Destillationsbrücke versehen ist, werden unter intensivem Rühren Mischungen aus 200 g Wasser, 133 g (1 Mol) Asparaginsäure und den in Tabelle 3 jeweils angegebenen Mengen an Natriumhydrogensulfat oder Kaliumhydrogensulfat hergestellt und bei einer Temperatur von 100°C im Vakuum der Wasserstrahlpumpe zur Trockne eingedampft. Der Rückstand wird anschließend 6 Std. bei 180°C getempert, wobei 10 Min. nach Polymerisationsbeginn ein fester Kuchen entsteht, der zerschlagen und als Pulver unter Rühren weiterpolykondensiert wird. Das Reaktionsprodukt wird nach dem Erkalten in Wasser aufgeschlämmt, salzfrei gewaschen, getrocknet und mit Natronlauge in dem pH-Bereich von 8-9 hydrolysiert und neutralisiert. Die K-Werte der Natriumsalze der so erhältlichen Polyasparaginsäure sind in Tabelle 3 angegeben.

**Tabelle 3**

| Vergleichsbeispiel | NaHSO₄ [mol] | KHSO₄ [mol] | Ausbeute [g] | K-Wert |
|---|---|---|---|---|
| 1 | 0,1 | - | 72 | 18,1 |
| 2 | 0,3 | - | 91 | 22,4 |
| 3 | - | 0,1 | 73 | 17,5 |
| 4 | - | 0,3 | 94 | 23,9 |

## Patentansprüche

1. Verfahren zur Herstellung von Polykondensaten der Asparaginsäure durch Polykondensation von Asparaginsäure bei Temperaturen oberhalb von 140°C in Gegenwart von Katalysatoren, dadurch gekennzeichnet, daß man als Katalysator Mischungen aus Kalium- und Natriumhydrogensulfat verwendet, deren Schmelzpunkte höchstens 200°C betragen.

2. Verfahren nach Anspruch 1, dadurch gekennzeichnet, daß man pro Mol Asparaginsäure 0,01 bis 10 Mol Hydrogensulfat einsetzt.

3. Verfahren nach Anspruch 1 oder 2, dadurch gekennzeichnet, daß man die Polykondensation nach Art einer Fällungspolymerisation in einer Schmelze durchführt, die Mischungen aus Kalium- und Natriumhydrogensulfat enthält.

4. Verwendung der nach den Ansprüchen 1 bis 3 erhältlichen Verfahrensprodukte in mit Alkalimetallbasen neutralisierter Form als Zusatz zu phosphatreduzierten und phosphatfreien Wasch- und Reinigungsmitteln.

## Claims

1. A process for preparing polycondensates of aspartic acid by polycondensation of aspartic acid at temperatures above 140°C in the presence of catalysts, wherein mixtures of potassium bisulfate and sodium bisulfate whose melting points do not exceed 200°C are used as catalyst.

2. A process as claimed in claim 1, wherein from 0.01 to 10 mol of bisulfate are employed per mole of aspartic acid.

3. A process as claimed in claim 1 or 2, wherein the polycondensation is carried out as a type of precipitation polymerization in a melt which contains mixtures of potassium and sodium bisulfates.

4. The use of the products obtainable as claimed in any of claims 1 to 3, in a form neutralized with alkali metal bases, as additive to reduced phosphate and phosphate-free detergents and cleaners.

## Revendications

1. Procédé de préparation de polycondensats de l'acide aspartique par polycondensation d'acide aspartique à des températures supérieures à 140°C en présence de catalyseurs, caractérisé en ce qu'on utilise comme catalyseur des mélanges d'hydrogénosulfate de potassium et de sodium dont les points de fusion sont supérieurs à 200°C.

2. Procédé selon la revendication 1, caractérisé en ce qu'on utilise 0,01 à 10 moles d'hydrogénosulfate par mole d'acide aspartique.

3. Procédé selon la revendication 1 ou 2, caractérisé en ce qu'on effectue la polycondensation selon la technique de la polymérisation par précipitation dans une masse fondue qui contient des mélanges d'hydrogénosulfate de potassium et de sodium.

4. Utilisation des produits obtenus selon les procédés des revendications 1 à 3, sous forme neutralisée par des bases de métaux alcalins, comme produit d'addition à des agents de lavage et de nettoyage à teneur réduite en phosphates et sans phosphates.
